(19) **Europäisches Patentamt**

**European Patent Office**

**Office européen des brevets**

(11) **EP 0 947 309 B1**

(12) **EUROPEAN PATENT SPECIFICATION**

(45) Date of publication and mention
of the grant of the patent:
**15.09.2004 Bulletin 2004/38**

(51) Int Cl.⁷: **B29C 65/02**, B29C 65/66,
B29C 65/70, B29C 67/04
// B29K27:18

(21) Application number: **97946812.1**

(22) Date of filing: **02.12.1997**

(86) International application number:
**PCT/JP1997/004388**

(87) International publication number:
**WO 1998/024612 (11.06.1998 Gazette 1998/23)**

(54) **METHOD FOR JOINING MODIFIED POLYTETRAFLUOROETHYLENE MOULDINGS**

VERFAHREN ZUM VERBINDEN VON MODIFIZIERTEN
POLYTETRAFLUORETHYLENGEGENSTÄNDEN

PROCEDE POUR JOINDRE DES PIECES MOULEES EN POLYTETRAFLUOROETHYLENE
MODIFIE

(84) Designated Contracting States:
**DE FR GB IT**

(30) Priority: **03.12.1996 JP 32254496**

(43) Date of publication of application:
**06.10.1999 Bulletin 1999/40**

(73) Proprietor: **DAIKIN INDUSTRIES, LIMITED
Osaka-shi Osaka 530 (JP)**

(72) Inventors:
• **SHIRASAKI, Osamu,
Yodogawa Works of Daikin Ind.
Settsu-shi, Osaka 566 (JP)**
• **KAWACHI, Shoji,
Yodogawa Works of Daikin Ind. Ltd.
Settsu-shi, Osaka 566 (JP)**
• **TANIGAWA, Shingo,
Yodogawa Works of Daikin Ind.
Settsu-shi, Osaka 566 (JP)**

(74) Representative: **HOFFMANN - EITLE
Patent- und Rechtsanwälte
Arabellastrasse 4
81925 München (DE)**

(56) References cited:
**DE-A- 2 824 612          FR-A- 2 535 337
JP-A- 1 131 392          JP-A- 54 010 378
JP-A- 62 021 524          JP-B- 63 067 808**

• **PATENT ABSTRACTS OF JAPAN vol. 018, no.
438 (M-1656), 16 August 1994 (1994-08-16) & JP
06 134869 A (OLYMPUS OPTICAL CO LTD), 17
May 1994 (1994-05-17)**
• **PATENT ABSTRACTS OF JAPAN vol. 012, no.
484 (M-776), 16 December 1988 (1988-12-16) & JP
63 203317 A (NIPPON VALQUA IND LTD), 23
August 1988 (1988-08-23)**

**Description**

The present invention relates to a method for producing a molded article of a modified polytetrafluoroethylene (hereinafter referred to as "modified PTFE") by joining. In particular, the present invention relates to a method for producing the molded article of a modified PTFE by sintering the premolded parts of the modified PTFE to join them together at their abutting faces.

PRIOR ART

A method is known to produce the molded article of a modified PTFE, which comprises heating and press-bonding two or more molded parts of a modified PTFE (see Hostaflon Information 21 (August, 1983) published by Hoechst AG). However, this method has drawbacks such that a material loss is large since parts are produced by cutting, and that faces to be bonded should be processed so as to be smooth. Furthermore, in this method, it is difficult to control pressure during press-bonding, and thus defective products tend to be produced due to too high or low pressures.

JP-B-63-67808 discloses the bonded product of the molded articles of a modified PTFE. However, the articles are bonded by heating and press-bonding. That is, the articles are bonded by heating while applying external pressure. This method may be suitable for bonding thin articles such as sheets or films, but tends to produce defective products due to too high or low pressures when thick articles are bonded by this method, like in the case of the above method described in the brochure of Hoechst AG.

JP-A-55-57429 discloses a method comprising inserting a center mold in a tubular mold, placing cap molds at the top and bottom of the tubular mold, and bonding the both edges of a PTFE sheet in a space formed by the molds with expansion pressure of the sheet. This method requires a set of premolding molds and molds for expansion bonding for each size of a product, and is industrially disadvantageous as a method for producing various kinds of products. Furthermore, the molds should be sealed since the method utilizes the expansion pressure. Therefore, the steps of the method become very complicated as a whole.

Furthermore, when a thick wall container having a bottom and a sidewall is produced, a method is known, which comprises filling a modified PTFE powder in a mold and pressing it while heating. However, the compression distance is short at the bottom, while the distance is long at the sidewall. Thus, cracks may be formed at parts near the interface between the bottom and the sidewall, so that good molded articles are not produced.

JP-A-62021524 relates to a method of producing a synthetic resin tube bundle for a heat exchanger while avoiding the collapsing of the tubes. The tubes are made of a tetrafluoroethylene-hexafluoropropylene copolymer or a tetrafluoroethylene-perfluoroalkyl vinyl ether copolymer. The bundle of tubes is produced by placing individual fluororesin tubes inside a fluororesin sleeve. The bundle of tubes is then fused to each other and to the sleeve by the action of a heater and a vacuum pump.

SUMMARY OF THE INVENTION

One object of the present invention is to provide a method for producing the molded article of a modified PTFE by joining, in which bonded parts have sufficient bond strength even in the case of a thick wall article, and which overcomes the above-described drawbacks of the prior art.

Another object of the present invention is to provide a method for producing the molded article of a modified PTFE by joining, which can suppress the production of defective articles, improve the dimensional accuracy of the article, and decrease the material loss due to the production of parts by cutting.

A further object of the present invention is to provide a method for producing the molded article of a modified PTFE by joining, which includes simplified operations to join the parts of a modified PTFE, and greatly improves the productivity, particularly in the mass production.

Accordingly, the present invention provides a method for producing the molded article of a modified PTFE by joining comprising the steps of:

    providing at least two premolded parts of modified PTFEs having different coefficients of thermal shrinkage with allowing their joining faces to be in contact each other or to be closely placed, and
    sintering the parts to join them at the joining faces.

In one preferred embodiment, the joining of the parts at their joining faces is carried out without the application of an external pressure.

In general, a premolded part has a coefficient of thermal shrinkage in the range between 0.2 and 10 %, and the difference of the coefficient of thermal shrinkage is from 0.2 to 9.8 % between two premolded parts which are adjacently placed.

In other preferred embodiment, at least one premolded part is surrounded by another premolded part having a larger coefficient of thermal shrinkage than that of at least one premolded part.

BRIEF DESCRIPTION OF THE DRAWINGS

Fig. 1 is a graph showing the relationship of a premolding pressure and a coefficient of shrinkage of the outer diameter of tubular premolded parts of the modified PTFEs having different particles sizes, which are used in Example 1.
Fig. 2 is a graph showing the relationship of a premolding pressure and a coefficient of shrinkage of the outer diameter of the tubular premolded parts of modified PTFE, which is used in Example 2.
Fig. 3 is a graph showing the relationship of a premolding pressure and a coefficient of shrinkage of the outer diameter of the premolded parts of modified PTFEs having different particles sizes, which are used in Example 3.
Fig. 4 is a graph showing the relationship of a premolding pressure and a coefficient of shrinkage of the outer diameter of the premolded parts of modified PTFEs having different particles sizes, which are used in Example 4.
Fig. 5 is a graph showing the relationship of a premolding pressure and an outer-diameter shrinkage factor of the premolded parts of modified PTFEs having different particles sizes, which are used in Example 5.

DETAIELD DESCRIPTION OF THE INVENTION

The term "modified PTFE" intends to mean a copolymer of tetrafluoroethylene and a small amount of one or more of the following modifier monomers.
Examples of the modifier monomers for PTFE include fluorine-containing unsaturated monomers other than TFE, such as a fluoroalkyl vinyl ether of the formula:

$$X(CF_2)_nOCF=CF_2$$

wherein X is a hydrogen atom, a atom or a chlorine atom, and n is an integer of 1 to 6, or the formula:

$$C_3F_7(OCF_2CF_2CF_2)_m[OCF(CF_3)CF_2]_1OCF=CF_2$$

wherein m and 1 are each an integer of 0 to 4, provided that they are not 0 (zero) at the same time; $CF_3-CF=CF_2$, $CF_2=CFH$, $CF_2=CFCl$, $CF_2=CH_2$; an unsaturated compound of the formula:

$$RfCY=CH_2$$

wherein Rf is a linear or branched polyfluoroalkyl group having 3 to 21 carbon atoms, and Y is a hydrogen atom or a fluorine atom; and the like.
Such a modifier monomer is usually used in an amount of 0.01 to 1.0 wt. % of the weight of TFE.
In the present invention, modified PTFE can be used in the form of an as-polymerized powder, or in the form of granules which are obtained by granulating such a powder. Herein, the powders and granules of modified PTFE are collectively called "modified PTFE powder".
Furthermore, it is possible to disperse suitable amounts of various fillers in a modified PTFE powder. Examples of such fillers are glass fiber, graphite fiber, carbon fiber, bronze powder, etc. In addition, other conventional additives may be compounded in a modified PTFE powder.
The method of the present invention is particularly useful to produce a molded article in which one part (first part) surrounds the other part (second part), for example, a container having a bottom and a sidewall surrounding the bottom, an article having a solid or hollow cylindrical body and a flange surrounding such a body, etc.
In the method of the present invention, the parts of modified PTFE can be joined without the application of external pressure. However, the supplemental application of external pressure is not excluded from the present invention.
According to the production method of the present invention, in the case of the above-described article in which one part (first part) surrounds the other part (second part), when the second part has a smaller coefficient of thermal shrinkage than that of the first part, the first part shrinks in a greater degree than the second part in the sintering step (heating and subsequent cooling) in the production method, so that a sufficient force may be exerted at their joining faces, and thus the parts can be bonded at their joining faces.

The premolded parts of modified PTFE used in the method of the present invention may be film-form, sheet-form, block-form or any other form premolded parts, which are produced by compression molding, or any other suitable molding methods. The shapes of premolded parts may be suitably selected according to the shapes of final molded articles.

Conditions for the production of the premolded parts of modified PTFE are selected from the same ranges as those of the conventional methods. That is, a temperature is less than the melting point of modified PTFE, a pressure is one such that modified PTFE powder particles are well adhered at a given temperature to form an integral premolded part.

Two or more premolded parts of modified PTFE having different coefficients of thermal shrinkage can be obtained by various methods.

Typical methods are explained. For example, parts having different coefficients of thermal shrinkage can be obtained by separately premolding two or more modified PTFE powders having the same molecular weight but different particle sizes under the same conditions. In general, a premolded part has a smaller coefficient of thermal shrinkage, as a particle size of a modified PTFE powder is made larger.

Two ore more premolded parts having different coefficients of thermal shrinkage can be obtained by premolding the same modified PTFE powder under different pressures. In general, a premolded part has a smaller coefficient of thermal shrinkage, as a pressure is higher.

Alternatively, premolded parts of modified PTFE having different coefficient of thermal shrinkage can be obtained under the same premolding conditions from an as-polymerized modified PTFE powder, and a granulated product of such a modified PTFE powder. In general, a premolded part made from the granulated product has a smaller coefficient of thermal shrinkage than one made from the ungranulated modified PTFE powder.

Herein, "a coefficient of thermal shrinkage" (%) is a coefficient of thermal shrinkage of an outer diameter of a disk-form molded article having a thickness of 7 mm molded with a mold having an inner diameter of 65 mm, after sintering. The coefficient of thermal shrinkage of an outer diameter is calculated according to the following formula:

$$\text{Coefficient of thermal shrinkage (\%)} =$$

$$[(\text{inner diameter of mold (65 mm)}) - (\text{outer diameter of sintered}$$

$$\text{disk (mm)})/(\text{inner diameter of mold (65 mm)})] \times 100$$

A disk-form molded article is produced by supplying 50 g of modified PTFE powder in a mold, increasing a pressure at a rate of 25 - 30 mm/min. at room temperature, and pressurizing the powder under 300 kgf/cm$^2$ for 5 minutes, and sintered by heating the disk up to 360°C at a heating rate of 50°C/hr., maintaining the disk at 360°C for 6 hours, and then cooling to 100°C at a cooling rate of 50°C/hr.

The size of the disk-form article is measured after keeping it at room temperature for 8 hour or longer.

In the present invention, the coefficient of thermal shrinkage of a premolded part of modified PTFE is preferably in the range between 2 % and 10 %, more preferably in the range between 0.5 % and 2.0 %.

The difference of the coefficient of thermal shrinkage of a pair of adjacently placed premolded parts of modified PTFE is preferably in the range between 0.2 % and 9.8 %, more preferably in the range between 0.4 % and 1.0 %.

Premolded parts can be bonded by providing them with allowing their joining faces to be in contact each other or to be closely placed, and sintering them.

Herein, the phrase "allowing joining faces to be closely placed" means that the joining faces are separated at a distance at which the joining faces can be bonded in the sintering step by the difference of a coefficient of thermal shrinkage between premolded parts.

The upper limit of a sintering temperature is not limited. However, too high temperature causes the thermal decomposition of modified PRFE. Thus, a sintering temperature is less than the thermal decomposition temperature of modified PTFE. Heating and cooling rates can be suitably adjusted by conventional methods.

A heating time is not limited. Premolded parts are heated for a period of time sufficient for shrinking the parts to bond the joining faces of the parts with sufficient strength.

According to the bonding method of the present invention, the joining faces of parts can be strongly bonded even when the parts have a large thickness. Thus, the production of defective articles is decreased, the dimensional accuracy of a molded article increases, and material loss due to the production of parts by cutting can be decreased.

The method of the present invention improves the productivity, particularly in mass production, since the production of articles can be repeated by very simple procedures once the combination of two or more modified PTFE powders having different coefficients of thermal shrinkage is selected, and then specific molding conditions suitable for such a selected combination are fixed, when the molded articles of modified PTFE having a certain shape and certain sizes are produced.

EXCAMPLES

The present invention will be illustrated by the following examples.

Example 1

1) NEW POLYFLON M-112 (modified PTFE available from Daikin Industries, Ltd.) was ground and sieved to obtain two kinds of modified PTFE powders having an average particle size of 28 μm and 55 μm, respectively. Average particle sizes were measured with a laser beam diffraction type (dry type) particle size distribution analyzer (manufactured by SYNPATEC).

Each powder was compression molded at 25°C under a pressure of 150, 200, 250, 300 and 350 kg/cm$^2$ to obtain a tubular premolded part having an outer diameter of 100 mm, an inner diameter of 50 mm and a height of 50 mm.

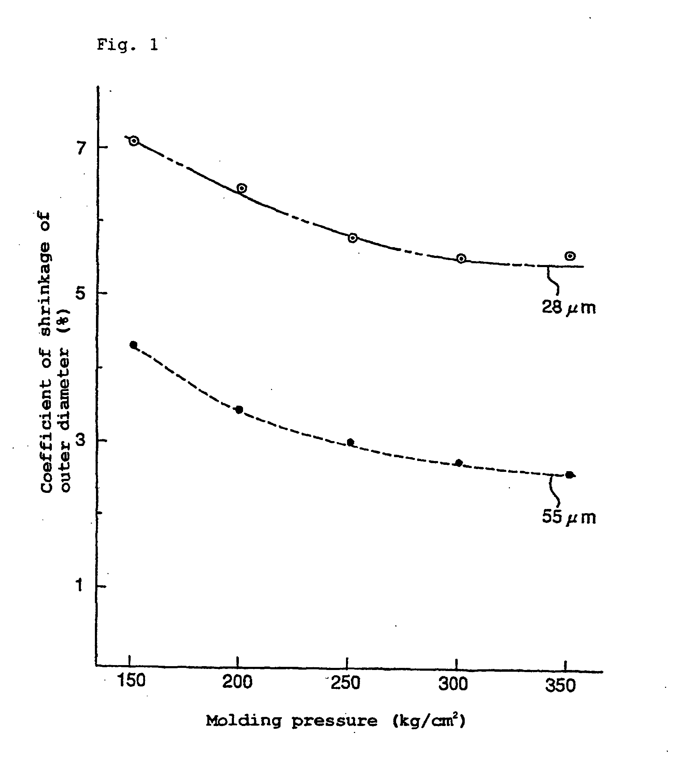

Each tubular article was heated at 360°C to sinter the modified PTFE. The tubular article shrunk in the radial direction. Fig. 1 shows a graph plotting a coefficient of thermal shrinkage of an outer diameter against a molding pressure.

It can be understood from these results that an article produced from a modified PTFE having a smaller particle size has a larger coefficient of thermal shrinkage than one produced from a modified PTFE powder having a larger particle size, at any premolding pressure.

2) The modified PTFE powder having an average particle size of 28 μm was molded under a pressure of 300 kg/cm$^2$ to obtain a tubular premolded part having an outer diameter of 100 mm, an inner diameter of 50 mm and a height of 70 mm.

Separately, the modified PTFE powder having an average particle size of 55 μm was molded under the same pressure as above to obtain a disk-form premolded part having a diameter of 50 mm and a thickness of 15 mm.

The disk-form premolded part was inserted in the lowest position of the hollow part of the tubular premolded part to provide a bottom, and the composite of the premolded parts was heated at 360°C for 6 hours without applying any external pressure around the periphery of the tubular article.

After cooling, the tubular article and disk-form article which constituted the sidewall and bottom of the finished container, respectively, were firmly bonded, and the joined faces were watertight and airtight.

Example 2

1) NEW POLYFLON M-137 (modified PTFE available from Daikin Industries, Ltd. having an average particle size of 425 μm (measured according to ASTM D4894) was molded at 25°C under various pressures in a range between 100 and 500 kg/cm$^2$ to obtain a tubular premolded part having an outer diameter of 100 mm, an inner diameter of 50 mm and a height of 50 mm.

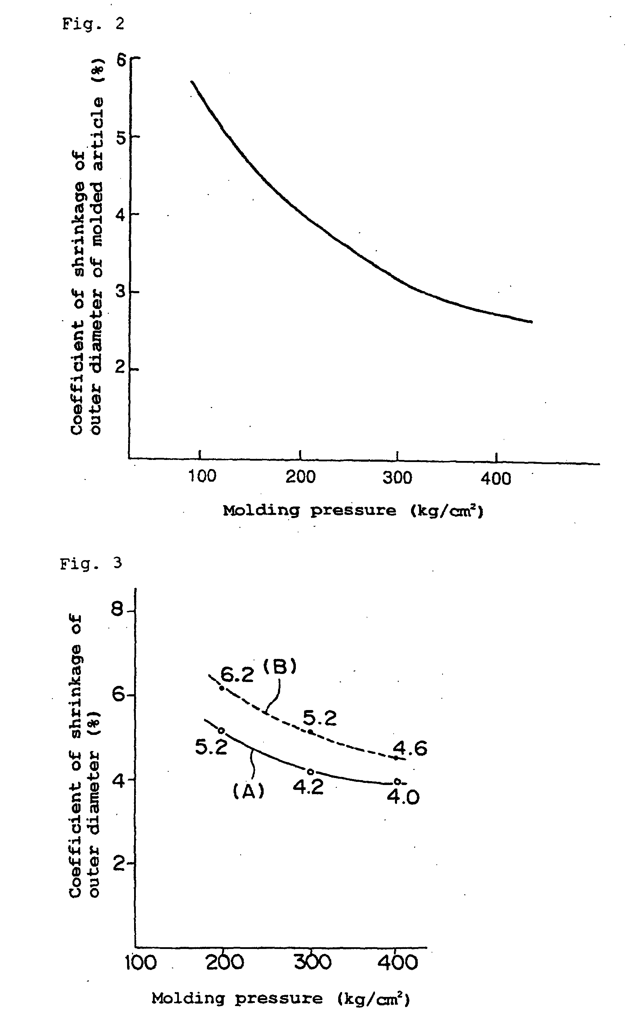

Each tubular article was heated and sintered at a temperature of from 340 to 390°C. The tubular article shrunk in the radial direction. Fig. 2 shows a graph plotting a coefficient of thermal shrinkage of an outer diameter against a molding pressure.

It can be understood from these results that an article molded under a higher premolding pressure has a smaller coefficient of thermal shrinkage when the particle size is the same.

2) The modified PTFE powder (NEW POLYFLON M-137) was molded under a pressure of 250 kg/cm$^2$ to obtain a tubular premolded part having an outer diameter of 100 mm, an inner diameter of 50 mm and a height of 70 mm.

Separately, the same modified PTFE powder as that used in the above was molded under a pressure of 400 kg/cm$^2$ to obtain a disk-form premolded part having a diameter of 50 mm and a thickness of 15 mm.

The disk-form premolded part was inserted in the lowest position of the hollow part of the tubular premolded part to provide a bottom, and the composite of the premolded parts was heated at a temperature of 340 to 390°C for 6 hours without applying any external pressure around the periphery of the tubular article.

The tubular article and disk-form article, which constituted the sidewall and bottom of the finished container, respectively, were firmly bonded, and the joined faces were watertight and airtight.

Example 3

1) NEW POLYFLON M-111 (modified PTFE available from Daikin Industries, Ltd.) was ground and sieved to obtain two kinds of modified PTFE powders having an average particle size of 31 $\mu$m (Powder A) and 55 $\mu$m (Powder B), respectively. An average particle size was measured with a laser beam diffraction type (dry type) particle size distribution analyzer (manufactured by SYNPATEC)

Each powder (50 g) was charged in a mold having an outer diameter of 95 mm, an inner diameter of 65 mm and a height of 60 mm, compressed at 25°C at a compression rate of 25 to 30 mm/min., and maintained under a pressure of 200, 300 and 400 kg/cm$^2$ for 5 minutes to obtain a disk-form premolded part.

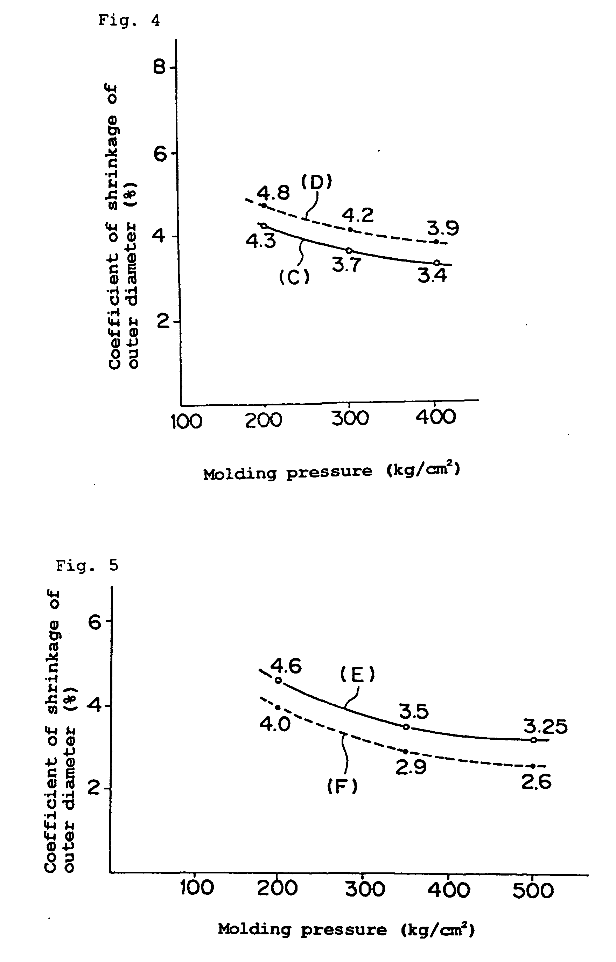

Then, the premolded part was heated from room temperature to 360°C at a heating rate of 50°C/hr., maintained at 360°C for 6 hours, and cooled to 100°C at a cooling rate of 50°C/hr. After that, the premolded part was maintained at room temperature for 8 hours or longer. The outer diameter of the disk was measured, and the coefficient of shrinkage of an outer diameter was calculated according to the above formula. The results are plotted in Fig. 3.

When a molding pressure is the same, the smaller particle size gives a larger coefficient of shrinkage of an outer diameter. When a particle size is the same, the higher molding pressure gives a smaller coefficient of shrinkage of an outer diameter.

2) Powder B was molded under a pressure of 300 kg/cm$^2$ to obtain a tubular premolded part having an outer diameter of 110 mm, an inner diameter of 80 mm and a height of 100 mm.

Separately, Powder A was molded under a pressure of 300 kg/cm$^2$ to obtain a disk-form premolded part having a diameter of 80 mm and a thickness of 10 mm.

The disk-form premolded part was inserted in the lowest position of the hollow part of the tubular premolded part to provide a bottom, and the composite of the premolded parts was heated from room temperature to 360°C at a heating rate of 50°C/hr., maintained at 360°C for 8 hours, and then cooled to 100°C at a cooling rate of 50°C/hr., during which no external pressure was applied around the periphery of the tubular article. After this heating treatment, the composite molded article was maintained at a temperature of 23 to 25°C for 8 hours.

3) Water or acetone was poured in the hollow space of the article to check liquid-tightness. No leakage of water or acetone was observed.

A circular film having a thickness of 250 $\mu$m was skived from the bottom of the molded composite article, and a rectangular sample having a width of 10 mm and a length of 30 mm was cut out from each of four areas, which were on four directions extending orthogonally each other from the center of the circular film and crossed the bonded line. The tensile properties of each sample were measured with a strength-elongation measuring instrument (AGS 500D manufactured by Shimadzu Corporation) at a pulling rate of 100 mm/min. A tensile strength was from 152 to 189 kgf/cm$^2$, and an elongation at break was from 280 to 330 %. The sample was broken at an air-chucked part, and no breakage was observed at the bonded part.

Example 4

1) Powders A and B obtained in Example 3 were granulated to obtain Granulated Powders C and D each having an average particle size of 650 $\mu$m, which was measured according to ASTM D4894.

Each Granulated Powder (50 g) was molded under the same conditions as those in Example 3 to obtain a disk-form article, and the coefficient of shrinkage of an outer diameter was measured in the same manner as that used in Example 3. The results are shown in Fig. 4.

When a molding pressure is the same, a smaller particle size gives a larger coefficient of shrinkage of an outer diameter. When a particle size is the same, a higher molding pressure gives a smaller coefficient of shrinkage of an outer diameter.

2) A tubular premolded part having an outer diameter of 110 mm, an inner diameter of 80 mm and a height of 100 mm was produced by the same method as that in the step 2) of Example 3 except that Granulated Powder D was used in place of Powder B.

Separately, a disk-form premolded part having a diameter of 80 mm and a thickness of 10 mm was produced by the same method as that in the step 2) of Example 3 except that Granulated Powder C was used in place of Powder A.

The disk-form premolded part was inserted in the lowest position of the hollow part of the tubular premolded part to provide a bottom, and the composite of the premolded parts was heated from room temperature to 360°C at a heating rate of 50°C/hr., maintained at 360°C for 8 hours, and then cooled to 100°C at a cooling rate of 50°C/hr., during which no external pressure was applied around the periphery of the tubular article. After this heating treatment, the composite molded article was maintained at a temperature of 23 to 25°C for 8 hours.

3) Water or acetone was poured in the hollow space of the article to check liquid-tightness. No leakage of water or acetone was observed.

Four rectangular samples were cut out from the bottom of the molded article in the same way as that in the step 3) of Example 3, and the tensile properties of each sample were measured. A tensile strength was from 155 to 157 kgf/cm$^2$, and an elongation at break was from 210 to 220 %. The sample was broken at an air-chucked part, and no breakage was observed at the bonded part.

Example 5

1) NEW POLYFLON M-111 (modified PTFE available from Daikin Industries, Ltd. having an average particle size of 33 µm (measured with a laser beam diffraction type (dry type) particle size distribution analyzer)) (85 wt. parts) and glass fiber (manufactured by NIPPON SHEET GLASS CO., LTD.) (15 wt. parts) were mixed (Powder E).

Powder E was granulated to obtain a granulated powder having an average particle size of 650 µm (Granulated Powder F). The average particle size of the granulated powder was measured according to ASTM D4894.

Each powder (50 g) was molded under the same condition as those in Example 3 to obtain a disk-form article, and its coefficient of shrinkage of an outer diameter was measured in the same way as that in Example 3. The results are shown in Fig. 5. When a molding pressure is the same, a smaller particle size gives a larger coefficient of shrinkage of an outer diameter, even if glass fiber is added to a powder. When a particle size is the same, a higher molding pressure gives a smaller coefficient of shrinkage of an outer diameter.

2) A tubular premolded part having an outer diameter of 110 mm, an inner diameter of 80 mm and a height of 100 mm was produced by the same method as that in the step 2) of Example 3 except that Granulated Powder F was used in place of Powder B, and the molding pressure was changed to 400 kg/cm$^2$.

Separately, a disk-form premolded part having a diameter of 80 mm and a thickness of 10 mm was produced by the same method as that in the step 2) of Example 3 except that Granulated Powder E was used in place of Powder A, and the molding pressure was changed to 400 kg/cm$^2$.

The disk-form premolded part was inserted in the lowest position of the hollow part of the tubular premolded part to provide a bottom, and the composite of the premolded parts was heated from room temperature to 360°C at a heating rate of 50°C/hr., maintained at 360°C for 8 hours, and then cooled to 100°C at a cooling rate of 50°C/hr., during which no external pressure was applied around the periphery of the tubular article. After this heating treatment, the composite molded article was maintained at a temperature of 23 to 25°C for 8 hours.

3) Water or acetone was poured in the hollow space of the article to check liquid-tightness. No leakage of water or acetone was observed.

**Claims**

1.  A method for joining at least two premolded modified polytetrafluoroethylene parts having different coefficients of thermal shrinkage by placing the parts in contact with each other or such that they are closely placed, and then sintering the parts to join them at their joining faces.

2.  A method according to Claim 1, which is carried out without applying external pressure to the parts.

3.  A method according to claim 1 or 2, wherein said premolded parts each has a coefficient of thermal shrinkage of 0.2-10%, and the difference of the coefficients of thermal shrinkage between one of said premolded parts and one of other premolded parts is 0.2-9.8%.

4.  A method according to any preceding claim, wherein at least one of the premolded parts is surrounded by one or more of the other premolded parts, the other premolded parts having a larger coefficient of thermal shrinkage than that of said at least one of the premolded parts.

**Patentansprüche**

1.  Verfahren zur Verbindung von mindestens zwei vorgeformten modifizierten Polytetrafluorethylenteilen mit unterschiedlichen thermischen Schrumpfungskoeffizienten, worin die Teile im Kontakt miteinander oder so, dass sie eng beieinander liegen, plaziert und die Teile anschliessend gesintert werden, wodurch sie an ihren aneinandergrenzenden Flächen verbunden werden.

2.  Verfahren gemäss Anspruch 1, das ohne Anlegen von äusserem Druck an die Teile durchgeführt wird.

3.  Verfahren gemäss Anspruch 1 oder 2, worin die vorgeformten Teile jeweils einen thermischen Schrumpfungskoeffizienten von 0,2-10 % aufweisen, und der Unterschied der thermischen Schrumpfungskoeffizienten zwischen einem der vorgeformten Teile und einem anderen vorgeformten Teil beträgt 0,2-9,8 %.

4.  Verfahren gemäss mindestens einem der vorhergehenden Ansprüche, worin mindestens eines der vorgeformten Teile von einem oder mehreren der anderen vorgeformten Teile umgeben ist, und die anderen vorgeformten Teile weisen einen grösseren thermischen Schrumpfungskoeffizienten auf als das mindestens eine vorgeformte Teil.

**Revendications**

1.  Procédé pour joindre au moins deux pièces en polytétrafluoréthylène modifié prémoulées ayant différents coefficients de retrait thermique en plaçant les pièces en contact l'une avec l'autre ou de telle sorte qu'elles soient placées proches l'une de l'autre, et puis en frittant les pièces pour les joindre au niveau de leurs faces de jointure.

2.  Procédé selon la revendication 1, qui est réalisé sans appliquer de pression externe sur les pièces.

3.  Procédé selon la revendication 1 ou 2, dans lequel lesdites pièces prémoulées ont chacune un coefficient de retrait thermique allant de 0,2 à 10 %, et la différence des coefficients de retrait thermique entre l'une desdites pièces prémoulées et l'une des autres pièces prémoulées est de 0,2 à 9,8 %.

4.  Procédé selon l'une quelconque des revendications précédentes, dans lequel au moins l'une des pièces prémoulées est entourée par une ou plusieurs des autres pièces prémoulées, les autres pièces prémoulées ayant un coefficient de retrait thermique plus important que celui de ladite au moins une des pièces prémoulées.

Fig. 1

Fig. 2

Fig. 3

Fig. 4

Molding pressure (kg/cm$^2$)

Fig. 5

Molding pressure (kg/cm$^2$)

11